Europäisches Patentamt

European Patent Office

Office européen des brevets

(19)

(11) **EP 0 854 990 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(21) Anmeldenummer: **97924924.0**

(22) Anmeldetag: **31.05.1997**

(51) Int Cl.⁷: **F16H 59/14**, F16H 61/04

(86) Internationale Anmeldenummer:
**PCT/DE97/01094**

(87) Internationale Veröffentlichungsnummer:
**WO 98/00658 (08.01.1998 Gazette 1998/01)**

(54) **SYSTEM ZUR ÄNDERUNG DER GETRIEBEÜBERSETZUNG BEI EINEM STUFENGETRIEBE**

SYSTEM FOR VARYING THE GEAR RATIO FOR A MULTI-STEP TRANSMISSION

SYSTEME POUR MODIFIER LE RAPPORT DE DEMULTIPLICATION D'UNE BOITE DE VITESSE AUTOMATIQUE

(84) Benannte Vertragsstaaten:
**DE FR GB IT**

(30) Priorität: **29.06.1996 DE 19626241**
**15.03.1997 DE 19710919**

(43) Veröffentlichungstag der Anmeldung:
**29.07.1998 Patentblatt 1998/31**

(73) Patentinhaber: **ROBERT BOSCH GMBH**
**70442 Stuttgart (DE)**

(72) Erfinder:
• ZHANG, Hong
D-93057 Regensburg (DE)
• DENZ, Helmut
D-70176 Stuttgart (DE)

(56) Entgegenhaltungen:
**EP-A- 0 001 298**     **WO-A-95/09741**
**US-A- 4 947 330**

EP 0 854 990 B1

**Beschreibung**

Stand der Technik

Die Erfindung geht aus von einem System zur Änderung der Getriebeübersetzung bei einem Stufengetriebe mit den Merkmalen des Oberbegriffs des Anspruchs 1.

Aus dem Stand der Technik, wie er beispielsweise durch die EP,A1,0 001 298 (entspricht US-PS 4,228,700) repräsentiert wird, ist es bekannt, beim Gangwechsel eines Automatikstufengetriebes die entsprechenden Gangschaltventile abhängig davon anzusteuern, ob ein Schubbetrieb oder ein Zugbetrieb des Motors vorliegt. Durch die Verknüpfung eines erkannten Zug- oder Schubbetriebes mit der Gangschaltart (Hoch- oder Rückschaltvorgang) kann eine Schaltstrategie derart ausgewählt werden, daß eine möglichst getriebeschonende und komfortable Anpassung der Motordrehzahl an den neuen Getriebegang stattfinden kann. Insbesondere ist daran gedacht, daß zu Beginn des Umschaltvorgangs die Umschaltung der erforderlichen Gangschaltventile positiv überschneidend erfolgt und zwar bei Lasthoch- und Schubrückschaltung zu Beginn des Umschaltvorgangs und bei Schubhoch- und Lastrückschaltung am Ende des Umschaltvorgangs.

Aus der DE-OS 42 32 974 (entspricht GB-PS 2,271,198) und der DE-OS 42 39 711 ist ein Modell zur Abschätzung des sogenannten indizierten Motormoments abhängig von der Motordrehzahl, der Motorlast, des Zündwinkels, der Zündungsausblendstufen und des Verlustmomentes abhängig von Motordrehzahl, Motorlast, Motortemperatur und Verbraucher (beispielsweise Klimakompressor) bekannt. In der DE-OS 44 07 475 wird dieses Motormomentenmodel zur Abschätzung des indizierten Motormoments um die Lambdaabhängigkeit, d. h. um die Abhängigkeit von der Kraftstoff-Luft-Gemischzusammensetzung, ergänzt. Aus diesen Schriften ist es also bekannt, zu jedem Betriebszeitpunkt das momentane Motorausgangsmoment genau zu berechnen.

Die WO-A- 95 09741 offenbart ein System gemäß dem Oberbegriff der Anspruchs 1.

Die Aufgabe der vorliegenden Erfindung besteht in der genauen und einfachen Auswahl der Umschaltestrategien bei der Änderung von Getriebeübersetzung bei Stufengetrieben.

Dieser Aufgabe wird durch die Merkmale des Anspruchs 1 gelöst.

Vorteile der Erfindung

Wie schon erwähnt geht die Erfindung aus von einem System zur Änderung der Getriebeübersetzung bei einem Stufengetriebe, bei dem während einer Änderung der Getriebeübersetzung eine Schwungmasse beschleunigt oder verzögert wird. Die Schwungmasse, im wesentlichen bestehend aus Motorkomponenten und dem Wandler, muß beispielsweise bei Rückschaltvorgängen beschleunigt werden, während die Schwungmasse bei Hochschaltvorgängen verzögert wird. Zur Veränderung der Getriebeübersetzung sind wenigstens zwei auswählbare unterschiedliche Strategien vorgesehen.

Der Kern der Erfindung besteht darin, daß zunächst ein das Motorausgangsmoment repräsentierender erster Wert und ein den Momentenbedarf zur Beschleunigung oder Verzögerung der Schwungmasse repräsentierender zweiter Wert erfaßt wird. Zur Änderung der Getriebeübersetzung wird dann eine der oben erwähnten Strategien abhängig von einem Vergleich des erfaßten ersten Wertes mit dem erfaßten zweiten Wertes ausgewählt.

Wie schon erwähnt sind aus dem Stand der Technik Verfahren bekannt, unterschiedliche Umschaltstrategien zur Änderung der Getriebeübersetzung je nach einem erkannten Schub- oder Zugbetrieb des Fahrzeugmotors auszuwählen. Diese Schub-Zug-Erkennung geschieht dabei abhängig von dem momentan erfaßten Drosselklappenwinkel. Dieses Verfahren ist jedoch ungenau und die Applikation ist relativ aufwendig. Die vorliegende Erfindung hat den Vorteil, daß sehr genau erkannt wird, ob es sich bei der einzuleitenden Getriebeumschaltung um eine Schub- oder Zugschaltung handelt. Darüber hinaus ist das erfindungsgemäße System relativ einfach zu applizieren. Weiterhin haben andere Funktionen der Motorsteuerung, beispielsweise ein Aufheizen des Katalysators, keinen Einfluß auf die erfindungsgemäße Schub- oder Zugerkennung.

In einer vorteilhaften Ausgestaltung der Erfindung ist vorgesehen, daß als Änderungsart der Getriebeübersetzungsänderung erfaßt wird, ob eine Änderung zu einer längeren Getriebeübersetzung (Hochschaltvorgang) oder zu einer kürzeren Getriebeübersetzung (Rückschaltvorgang) vorliegt und die Strategien abhängig von dieser erfaßten Änderungsart ausgewählt wird. Dieser Ausführungsform zielt darauf ab, daß neben dem erfindungsgemäßen Momentenvergleich zusätzlich die Schaltungsart zur Auswahl der Umschaltstrategien herangezogen wird. Abhänig von dem erfindungsgemäßen Vergleich des erfaßten ersten mit dem erfaßten zweiten Wert wird erkannt, ob ein Schubvorgang oder ein Zugvorgang vorliegt, wobei je nach erkanntem Zug- oder Schubbetrieb die geeignete Schaltstrategie ausgewählt wird.

Zur Erfassung des zweiten Wertes, der den Momentenbedarf zur Beschleunigung oder Verzögerung der Schwungmasse repräsentiert, kann vorgesehen sein, daß eine Zeitdauer für die Änderung der Getriebeübersetzung vorgegeben wird. In diesem Fall wird zur Erfassung des zweiten Wertes (Momentenbedarf zur Beschleunigung oder Verzögerung der Schwungmasse) die Differenz zwischen der Motor- und/oder Getriebeeingangsdrehzahl vor und nach der Änderung der Getriebeübersetzung bestimmt. Diese so bestimmte Differenz wird mit der vorgegebenen Zeitdauer und dem Trägheitsmoment der Schwungmasse und/oder mit dem Trägheitsmoment eines zwischen Fahrzeugmotor und Getriebe angeordneten Drehmomentwandlers zur Bildung des Momentenbedarfs verknüpft.

In einer weiteren vorteilhaften Ausgestaltung der Erfindung ist vorgesehen, daß der Vergleich des erfaßten ersten Wertes (Motorausgangsmoment) mit dem erfaßten zweiten Wert (Momentenbedarf zur Beschleunigung oder Verzögerung der Schwungmasse) mit einer vorgebbaren Hysterese versehen ist. Diese Hysterese kann dabei abhängig von der erfaßten Änderungsart (Hoch- und Rückschaltvorgang) vorgegeben werden.

Soll ein Getriebeumschaltvorgang eingeleitet werden, so entspricht das Motorausgangsmoment zu diesem Zeitpunkt nicht genau dem Motorausgangsmoment, das bei dem tatsächlichen Getriebeumschaltvorgang vorliegen wird. Dies kommt insbesondere durch Totzeiten beim Ab- bzw. Aufbau des Hydraulikdrucks an den Getriebekupplungen zustande. Zur genauen Auswahl der Schaltstrategie ist aus diesem Grund ein in die Zukunft prädiziertes Motorausgangsmoment gewünscht, um diese Totzeiten beim Auf- bzw. Abbau des Hydraulikdrucks an den Getriebekupplungen zu kompensieren. Aus diesem Grund wird in einer vorteilhaften Ausgestaltung als erster Wert für die Motorausgangsleistung ein prädiziertes Motorausgangsmoment ermittelt, wobei die Prädiktion von dem aktuellen Motorausgangsmoment, das bei Einleiten des Umschaltwunsches vorliegt, ausgeht. Um das prädizierte Motorausgangsmoment, das Motorausgangsmoment beim tatsächlichen Schaltvorgang, zu bestimmen, kann dieses aus dem aktuellen Lastsignal und drosselklappenwinkelabhängigen Größen prädiziert werden.

Zur Ermittlung des prädizierten Motorausgangsmoments können die Motorlast und/oder die Motordrehzahl repräsentierende Werte erfaßt werden. Insbesondere kann vorgesehen sein, daß die Änderung der Motorlast innerhalb einer vorgebbaren Prädiktionszeit erfaßt wird.

Alternativ können Werte erfaßt werden, die die Druck- und die Temperaturänderung vor der Drosselklappe des Fahrzeugmotors repräsentieren. Hierbei ist insbesondere vorgesehen, daß ein Lastsignal, das aus der erfaßten Motordrehzahl und der erfaßten Stellung der Drosselklappe ermittelt wird, mit den erfaßten Werten korrigiert wird. In dieser Ausführungsform wird also zur Ermittlung des prädizierten Motorausgangsmoments das aus der Drosselklappenstellung und der Motordrehzahl berechnete, mit dem Druck und der Temperatur vor der Drosselklappe korrigierte Motorlastsignal herangezogen.

Weitere vorteilhafte Ausgestaltungen sind den Unteransprüchen zu entnehmen.

Zeichnung

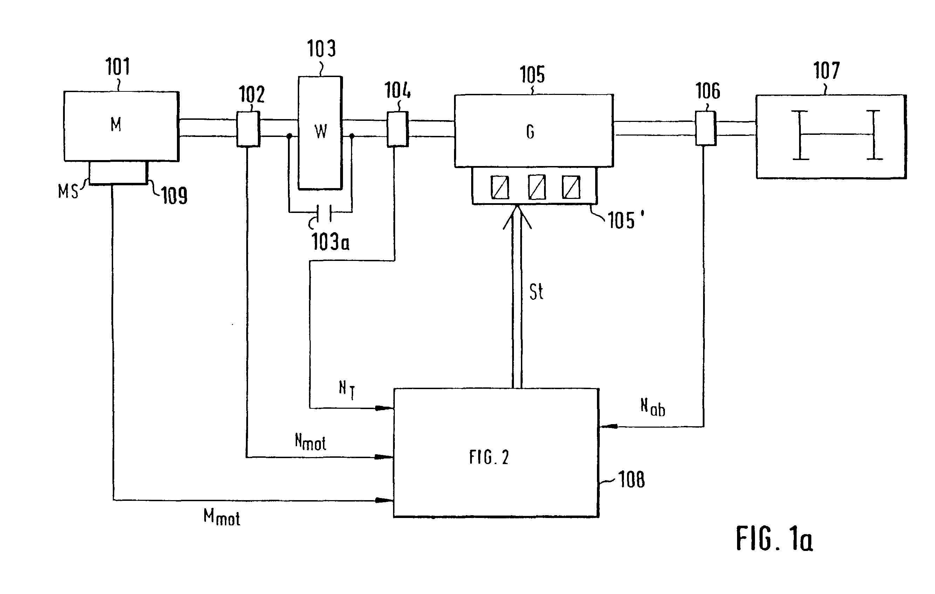

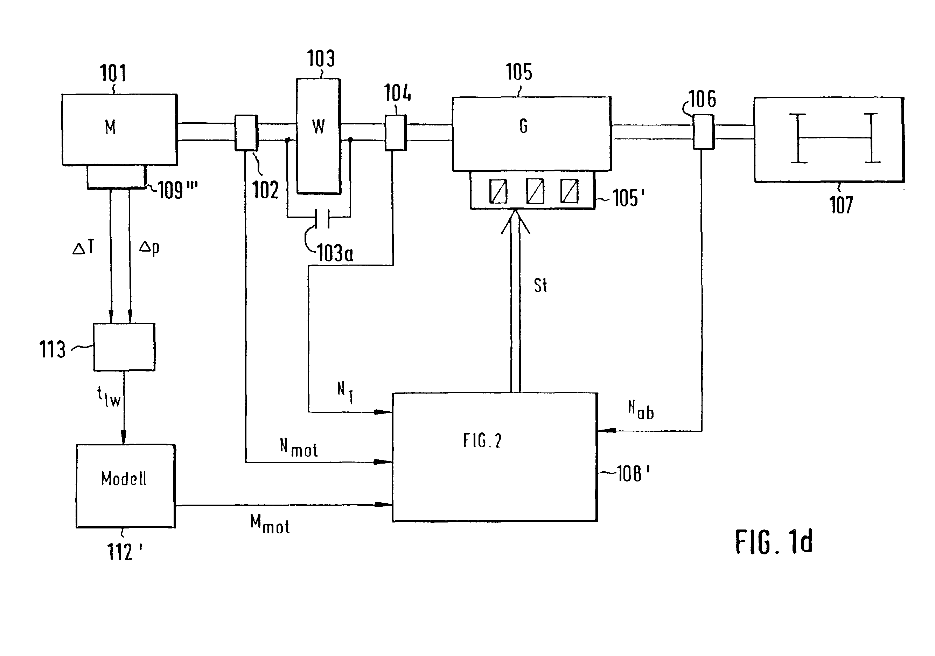

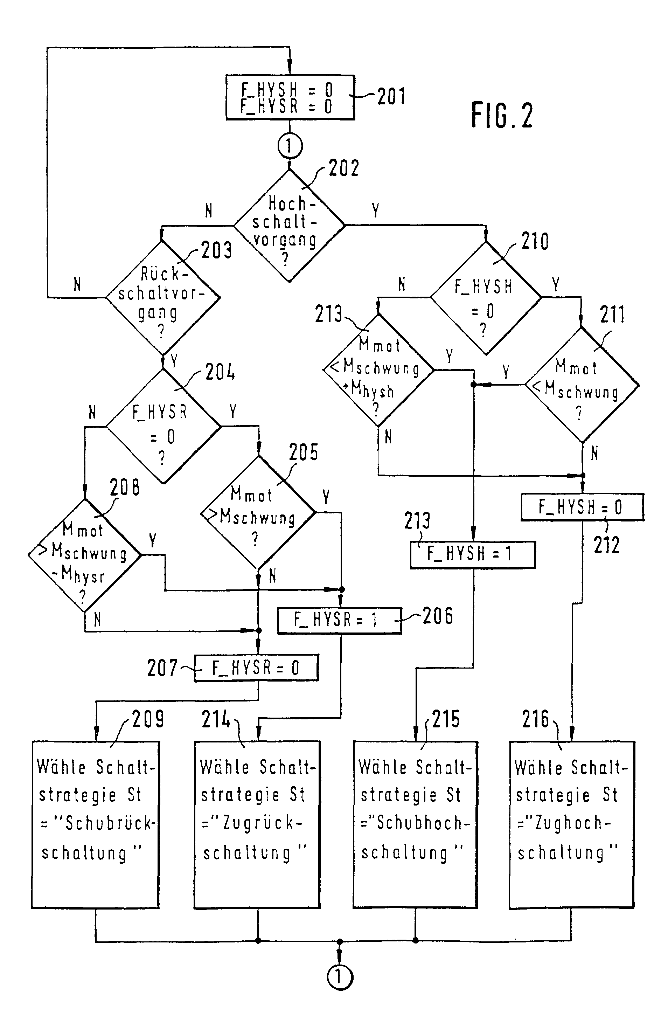

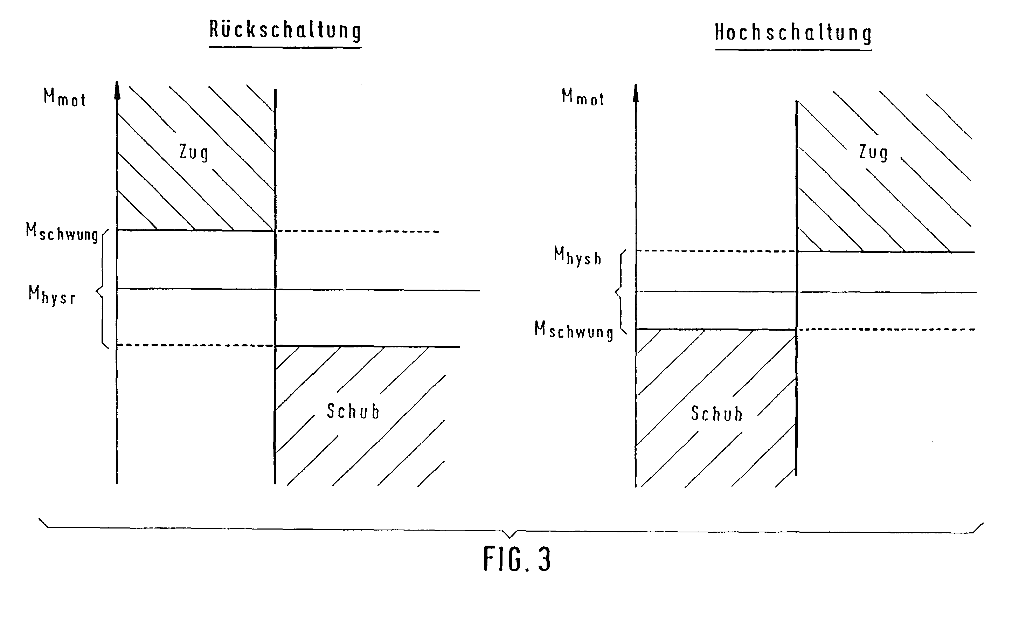

Die Figuren 1a bis 1d zeigen Blockschaltbilder verschiedener Ausführungsformen der Erfindung. Die Figur 2 stellt ein Ablaufdiagramm der Erfindung dar, während die in der Figur 3 gezeigte Abbildung zur Verdeutlichung des Hystereseverhaltens dient.

Ausführungsbeispiel

Die Erfindung soll im folgenden anhand von verschiedenen Ausführungsbeispielen erläutert werden.

In den eingangs erwähnten Anmeldungen DE-OS 42 39 711 und DE-OS 42 32 974 wird ein Modell zur Abschätzung des indizierten Motormoments $Mi_{mot,ist}$ abhängig von der Motordrehzahl, der Motorlast, dem Zündwinkel und den Ausblendungsstufen vorgestellt. Weiterhin ist es bekannt, das Verlustmoment $M_{mot,verl}$ abhängig von der Motordrehzahl, der Motorlast, der Motortemperatur sowie abhängig von Verbrauchern (z. B. einem Klimakompressor) zu ermitteln. In der eingangs erwähnten DE-OS 44 07 475 wird das Motormomentenmodel zur Abschätzung des indizierten Motormoments um die sogenannte Lambda-Abhängigkeit ergänzt. Dies bedeutet, daß zur Abschätzung des indizierten Motormoments auch die Kraftstoff-Luft-Zusammensetzung berücksichtigt wird. Das Motorausgangsmoment $M_{mot}$, das im Falle eines Schaltgetriebes auch Kupplungsmoment genannt wird, ergibt sich durch Abziehen des o. g. Motorverlustmoments vom indizierten Motormoment wie folgt:

$$M_{mot} = Mi_{mot,ist} - M_{mot,verl} \tag{1}.$$

Die Figuren 1a bis 1d zeigen Übersichtsblockschaltbilder von verschiedenen Ausgestaltungen der Erfindung, wobei gleiche Blöcke mit denselben Bezugszeichen markiert sind.

Der Fahrzeugmotor 101 wird durch die Motorsteuerung 109 gesteuert bzw. geregelt. Die Motordrehzahl $N_{mot}$ wird durch den Drehzahlsensor 102 erfaßt. Der zwischen dem Fahrzeugmotor 101 und dem Automatikgetriebe 105 angebrachte Drehmomentenwandler 103 kann durch Schließen der Kupplung 103a überbrückt werden. Die Getriebeeingangsdrehzahl $N_T$ des Getriebes 105 wird durch den Drehzahlsensor 104 gemessen. Die Getriebeausgangsdrehzahl $N_{ab}$ wird durch den Drehzahlsensor 106 erfaßt und an die im Block 107 schematisch gezeigten Fahrzeugräder weitergeleitet.

Die Umschaltvorgänge des Getriebes 105 werden durch die Schaltventile 105' getätigt. Diese Schaltventile werden durch die Schaltstrategie St von dem Getriebesteuergerät 108 beaufschlagt. Die Hoch- bzw. Rückschaltvorgänge werden im allgemeinen in der Getriebesteuerung 108 abhängig von der Motorlast (nicht dargestellt) und der Getriebeausgangsdrehzahl $N_{ab}$ getätigt. Weiterhin erhält die Getriebesteuerung 108 die Motordrehzahl $N_{mot}$ und die Getriebeeingangsdrehzahl $N_T$ sowie das Motormoment $M_{mot}$ von der Motorsteuerung 109.

Während eines Rückschaltvorgangs muß im Falle eines Zugbetriebs des Fahrzeugmotors die Motordrehzahl direkt vom Fahrzeugmotor hochgetrieben werden. Der Drehzahlunterschied $\Delta N$ vor und nach einem Rückschaltvorgang ergibt sich bei einer geschlossenen Wandlerkupplung 103a aus dem Gangsprung zwischen dem neuen Gang $i_{neu}$ und dem alten Gang $i_{alt}$ :

$$\Delta N = N_{mot,alt} * (i_{neu}/i_{alt}-1) \tag{2}.$$

wobei:

$\Delta N$:            Differenz zwischen der Motordrehzahl vor und nach dem Schaltvorgang.

$N_{mot,alt}$ :        Motordrehzahl vor dem Verlassen des alten Synchronpunktes.

$i_{neu}$ :           Getriebeübersetzung des neuen Gangs.

$I_{alt}$:            Getriebeübersetzung des alten Gangs.

Im Falle einer offenen Wandlerkupplung 103a muß die Gleichung 2 noch entsprechend um den Wandlerschlupf (Verhältnis von Motordrehzahl zur Getriebeeingangsdrehzahl) vor und nach eines Schaltvorgangs korrigiert werden.

Gegeben sei die Schaltzeit $T_{schalt}$, innerhalb der die Motordrehzahl $N_{mot}$ von dem Synchronpunkt des alten Getriebegangs auf den Synchronpunkt des neuen Getriebegangs angestiegen sein soll. Damit ergibt sich eine Soll-Beschleunigung der Schwungmasse:

$$dN/dt = \Delta N/T_{schalt} \tag{3}.$$

Der Momentenbedarf $M_{schwung}$ zur Beschleunigung der Schwungmasse ergibt sich:

$$M_{schwung} = \beta * (2\pi * dN/dt) \tag{4}.$$

wobei $\beta$ die Summe aus dem Trägheitsmoment der Schwungmasse und dem Trägheitsmoment des Drehmomentenwandlers ist.

Erfindungsgemäß wird für eine Rückschaltung die Schaltstrategie "Zug" erkannt, wenn das Motorausgangsmoment $M_{mot}$ größer als der Momentenbedarf $M_{schwung}$ zur Beschleunigung des Trägheitsmoments ist. In diesem Fall wird die Umschaltstrategie "Zugrückschaltung" ausgewählt.

Ist das Motorausgangsmoment $M_{mot}$ kleiner als der Momentenbedarf $M_{schwung}$, so wird auf "Schub" erkannt und die Umschaltstrategie "Schubrückschaltung" ausgewählt. Bei der Ermittlung des Motorausgangsmomentes $M_{mot}$ bleibt eine Motormomentenreduktion während der Getriebeumschaltung, ein sogenannter Getriebesteuerungsmotoreingriff, unberücksichtigt.

In der folgenden Formel 5 ist über den erfindungsgemäßen Vergleich hinaus noch eine Momenten-Hysterese bei der Schub-Zug-Erkennung für Rückschaltung eingearbeitet.

$$M_{mot} > M_{schwung}: \qquad \text{"Zugrückschaltung"}$$

$$M_{mot} < (M_{schwung} - M_{hysr}) : \text{"Schubrückschaltung"} \tag{5}.$$

wobei $M_{hysr}$ die Momenten-Hysterese bei der Schub-Zug-Erkennung für Rückschaltung ist.

Bei einem Hochschaltvorgang wird die Schub-Strategie für die Getriebesteuerung verwendet, wenn das Motorausgangsmoment $M_{mot}$ kleiner ist als der Momentenbedarf $M_{schwung}$ (s. Gleichung 4), wobei der Momentenbedarf $M_{schwung}$ in diesem Falle negativ ist:

$$M_{mot} < M_{schwung} : \qquad \text{"Schubhochschaltung"}$$

$$M_{mot} > (M_{schwung} + M_{hysh}) : \text{"Zughochschaltung"} \qquad (6).$$

wobei $M_{hysh}$ die Momenten-Hysterese bei der Schub-Zug-Erkennung für Hochschaltung ist.

Die oben beschriebene Vorgehensweise zur Ermittlung der Schaltstrategie ist in der Figur 2 aufgeführt.

Hierzu werden im Schritt 201 die Parameter F_HYSH und F_HYSR auf den Wert Null gesetzt. Im Schritt 202 wird abgefragt, ob es sich bei dem anstehenden Schaltvorgang um eine Hochschaltvorgang handelt. Ist dies nicht der Fall, so wird im Schritt 203 abgefragt, ob ein Rückschaltvorgang beabsichtigt ist. Ist auch dies nicht der Fall, so ist offensichtlich kein Schaltvorgang beabsichtigt, woraufhin wieder zum Schritt 201 zurückgegangen wird.

Wird im Schritt 203 festgestellt, daß ein Rückschaltvorgang beabsichtigt wird, so wird im Schritt 204 ermittelt, ob der Parameter F_HYSR den Wert Null aufweist. Ist dies der Fall, so wird im Schritt 205 überprüft, ob das Motorausgangsmoment $M_{mot}$ größer als der Momentenbedarf $M_{schwung}$ ist. Ist dies der Fall, so wird über den Schritt 206 (Parameter F_HYSR wird auf den Wert Eins gesetzt) im Schritt 214 die Schaltstrategie St "Zugrückschaltung" gewählt. Ist dies nicht der Fall, so wird über den Schritt 207 (Parameter F_HYSR wird auf den Wert Null gesetzt) im Schritt 209 die Schaltstrategie St "Schubrückschaltung" gewählt.

Wird im Schritt 204 festgestellt, daß Parameter F_HYSR (in dem vorher duchlaufenen Schritt 206) den Wert Eins aufweist, so wird im Schritt 208 überprüft, ob das Motorausgangsmoment $M_{mot}$ größer ist als der Momentenbedarf $M_{schwung}$ abzüglich dem obenerwähnten Hysteresewert $M_{hysr}$. Ist dies der Fall, so wird über den Schritt 206 (Parameter F_HYSR wird auf den Wert Eins gesetzt) im Schritt 214 die Schaltstrategie St "Zugrückschaltung" gewählt. Ist dies nicht der Fall, so wird über den Schritt 207 (Parameter F_HYSR wird auf den Wert Null gesetzt) im Schritt 209 die Schaltstrategie St "Schubrückschaltung" gewählt.

Wird im Schritt 202 festgestellt, daß ein Hochschaltvorgang beabsichtigt wird, so wird im Schritt 210 ermittelt, ob der Parameter F_HYSH den Wert Null aufweist. Ist dies der Fall, so wird im Schritt 211 überprüft, ob das Motorausgangsmoment $M_{mot}$ kleiner als der Momentenbedarf $M_{schwung}$ ist. Ist dies der Fall, so wird über den Schritt 213 (Parameter F_HYSH wird auf den Wert Eins gesetzt) im Schritt 215 die Schaltstrategie St "Schubhochschaltung" gewählt. Ist dies nicht der Fall, so wird über den Schritt 212 (Parameter F_HYSH wird auf den Wert Null gesetzt) im Schritt 216 die Schaltstrategie St "Zughochschaltung" gewählt.

Wird im Schritt 210 festgestellt, daß Parameter F_HYSH (in dem vorher duchlaufenen Schritt 213) den Wert Eins aufweist, so wird im Schritt 213 überprüft, ob das Motorausgangsmoment $M_{mot}$ kleiner ist als der Momentenbedarf $M_{schwung}$ zuzüglich dem obenerwähnten Hysteresewert $M_{hysh}$. Ist dies der Fall, so wird über den Schritt 213 (Parameter F_HYSH wird auf den Wert Eins gesetzt) im Schritt 215 die Schaltstrategie St "Schubhochschaltung" gewählt. Ist dies nicht der Fall, so wird über den Schritt 212 (Parameter F_HYSH wird auf den Wert Null gesetzt) im Schritt 216 die Schaltstrategie St "Zughochschaltung" gewählt.

Der Momentenbedarf $M_{schwung}$ zur Beschleunigung der Schwungmasse wird dabei nach den Gleichungen 2, 3 und 4 berechnet.

Die in der Figur 3 gezeigten Abbildungen machen den Einfluß der Hysteresen $M_{hysh}$ und $M_{hysr}$ deutlich.

Das abgeschätzte Motorausgangsmoment $M_{mot}$ stellt das momentan am Fahrzeugmotor realisierte Ausgangsmoment dar. Für die erfindungsgemäße Schub-Zug-Erkennung ist aber ein in Zukunft prädiziertes Motorausgangsmoment gewünscht, um die Totzeit beim Auf- bzw. Abbau des Hydraulikdrucks an den Getriebekupplungen zu kompensieren. Es sollen hier drei Möglichkeiten dargestellt werden, das Motorausgangsmoment zu prädizieren.

1. Möglichkeit:

Das zur Berechnung des indizierten Motormoments verwendete Füllungssignal $t_l$ wird in die Zukunft prädiziert:

$$t_{l,pr} = t_l + (t_{prae} * dt_{lw}/dt) \qquad (7).$$

wobei:

$t_l$:  momentane Füllung

$t_{l,pr}$:  prädiziertes Füllungssignal

$t_{prae}$:  Prädikationszeithorizont

$t_{lw}$:  aus Drosselklappenwinkel ($\alpha_{Dk}$) und Motordrehzahl ($N_{mot}$) nach dem vorgegebenen Funktion $F(\alpha_{Dk}, N_{mot})$ berechnete Ersatzfüllung

$dt_{lw}/dt$:  Gradient der Ersatzfüllung

Das so berechnete Füllungssignal $t_{l,pr}$ wird zu der aus dem eingangs erwähnten Stand der Technik an sich bekannten Berechnung des indizierten Motormoments und weiter zur Berechnung des tatsächlichen Motorausgangsmoments $M_{mot}$ an der Stelle von $t_l$ verwendet. Der Prädiktionshorizont $t_{prae}$ ist abhängig von der Art der Schaltung (beispielsweise abhängig davon, ob eine Getriebeumschaltung vom zweiten in den dritten oder vom dritten in den zweiten Getriebegang stattfindet).

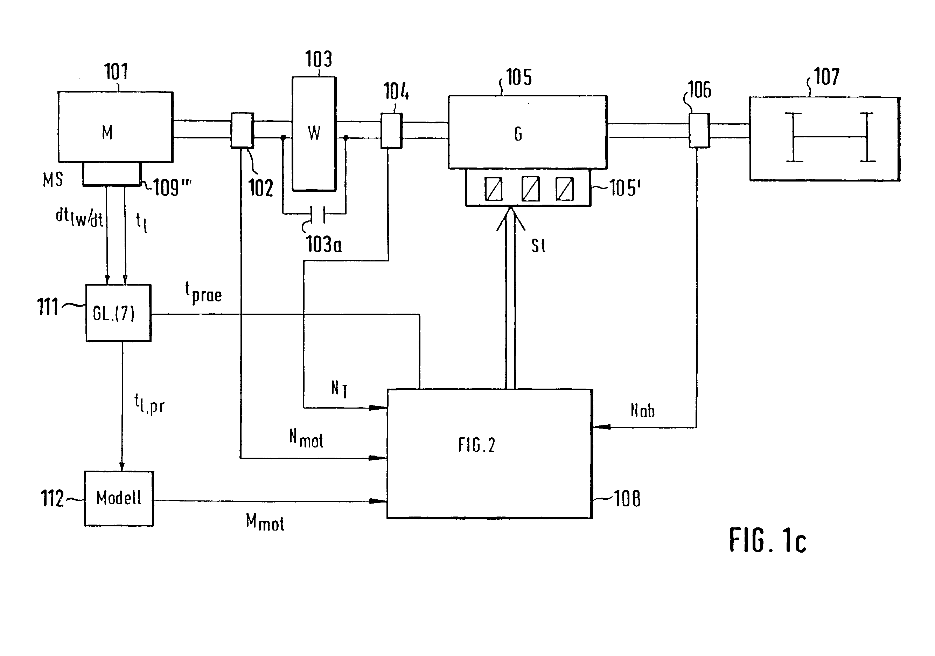

Diese Ausführungsform ist in der Figur 1c zusehen. Die in der Gleichung 7 benötigten Größen werden von der Motorsteuerung 109'' dem Block 111 zugeführt. Der Prädiktionshorizont $t_{prae}$ wird dem Block 111 von der Getriebesteuerung 108 je nach Schaltungsart zugeleitet. Gemäß der Gleichung 7 wird das prädizierte Füllungssignal berechnet, woraufhin mittels des aus dem eingangs erwähnten Stand der Technik bekannten Modells im Block 112 das Motorausgangsmoment $M_{mot}$ zu dem Zeitpunkt berechnet wird, zu dem der Gangwechsel im Getriebe 105 tatsächlich stattfindet.

2. Möglichkeit:

Zu dem momentan berechneten Ist-Motorausgangsmoment $M_{mot,ist}$ (ohne den oben erwähnten Getriebemotoreingriff) wird ein Korrekturterm hinzugefügt:

$$M_{mot,pr} = M_{mot,ist} + (\Delta M_{i,opt}/\Delta t_l) * dt_{lw}/dt * t_{prae} \tag{8}.$$

wobei:

$M_{mot,pr}$:  um den Prädikationszeithorizont $t_{prae}$ in die Zukunft prädiziertes Motorausgangsmoment

$\Delta M_{i,opt}/\Delta t_l$:  Änderung des indizierten Getriebeeingangs- bzw. Motorausgangsmoments pro Änderung der Füllung

$t_{prae}$:  Prädikationszeithorizont

$t_{lw}$:  aus Drosselklappenwinkel ($\alpha_{Dk}$) und Motordrehzahl ($N_{mot}$) nach dem vorgegebenen Funktion $F(\alpha_{Dk}, N_{mot})$ berechnete Ersatzfüllung

$dt_{lw}/dt$:  Gradient der Ersatzfüllung

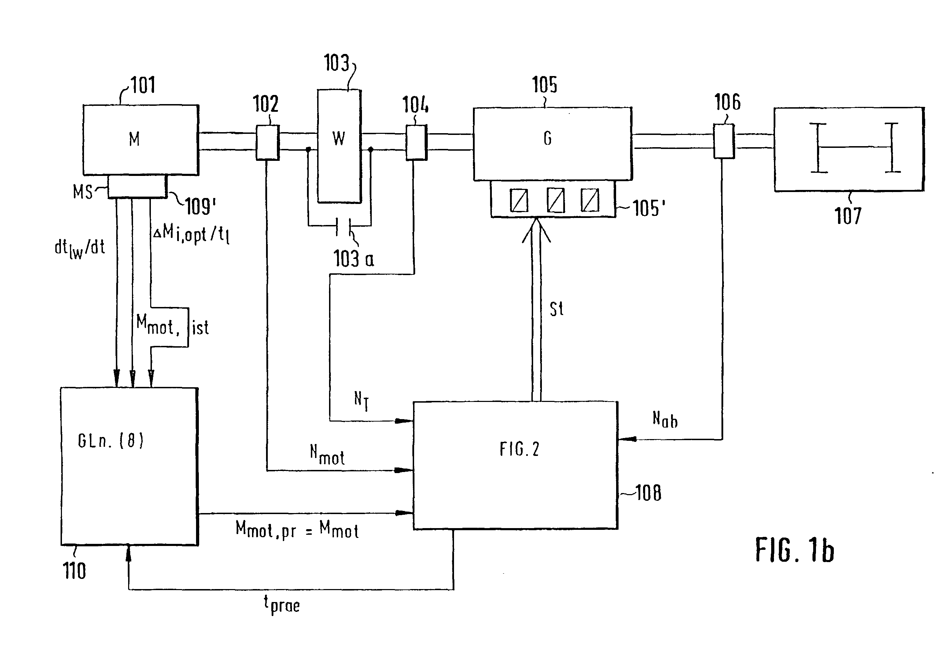

Diese Vorgehensweise ist in der Figur 1b dargestellt. Die in der Gleichung 8 benötigten Größen werden dem Block 110 von der Motorsteuerung 109' und der Getriebesteuerung 108 zur Verfügung gestellt. Das so korrigierte Motorausgangsmoment wird wie in der Figur 2 zu sehen ist in der Getriebesteuerung 108 zur Auswahl der Schub- oder Zugschaltstrategie verwendet.

3. Möglichkeit:

Eine relativ einfache Möglichkeit ist in der Figur 1d zu sehen. Hier wird zur Ermittlung des prädizierten Motorausgangsmoment ein Ersatzfüllungssignal $t_{lw}$ unter Berücksichtigung der Druck- und Temperaturänderung $\Delta T$ und $\Delta p$ vor der Drosselklappe zur Berechnung als vorauseilendes Fahrerwunschmoment herangezogen. Hierbei ist insbesondere vorgesehen, daß zur Ermittlung des prädizierten Motorausgangsmoments das aus der Drosselklappenstellung und der Motordrehzahl berechnete, mit dem Druck und der Temperatur vor der Drosselklappe korrigierte Motorlastsignal herangezogen. Diese Variante ist zwar relativ einfach, hat jedoch den Nachteil, daß der Prädiktionsvorhalt nicht variabel wählbar ist.

**Patentansprüche**

1. System zur Änderung der Getriebeübersetzung bei einem Stufengetriebe, bei dem während einer Änderung der Getriebeübersetzung eine Schwungmasse beschleunigt oder verzögert wird und zur Veränderung der Getriebeübersetzung wenigstens zwei auswählbare unterschiedliche Strategien vorgesehen sind, **dadurch gekennzeich-**

**net, daß**

- ein das Motorausgangsmoment repräsentierender erster Wert ($M_{mot}$) und ein den Momentenbedarf zur Beschleunigung oder Verzögerung der Schwungmasse bei der Änderung der Getriebeübersetzung repräsentierender zweiter Wert ($M_{schwung}$) erfaßt wird und
- eine der Strategien abhängig von einem Vergleich des erfaßten ersten Wertes ($M_{mot}$) mit dem erfaßten zweiten Wert ($M_{schwung}$) ausgewählt wird.

2. System nach Anspruch 1, **dadurch gekennzeichnet, daß** als Änderungsart erfaßt wird, ob eine Änderung zu einer längeren Getriebeübersetzung-Hochschaltvorgang-oder zu einer kürzeren Getriebeübersetzung-Rückschaltvorgang-vorliegt und eine der Strategien abhängig von dieser erfaßten Änderungsart ausgewählt wird.

3. System nach Anspruch 1 oder 2, **dadurch gekennzeichnet, daß** abhängig von dem Vergleich des erfaßten ersten Wertes ($M_{mot}$) mit dem erfaßten zweiten Wert ($M_{schwung}$) erkannt wird, ob ein Schub- oder ein Zugbetrieb vorliegt, und je nach erkanntem Zug- oder Schubbetrieb die geeignete Strategie ausgewählt wird.

4. System nach Anspruch 1, **dadurch gekennzeichnet, daß** zur Erfassung des zweiten Wertes ($M_{schwung}$) eine Zeitdauer ($T_{schalt}$) für die Änderung der Getriebeübersetzung vorgegeben wird.

5. System nach Anspruch 4, **dadurch gekennzeichnet, daß** zur Erfassung des zweiten Wertes ($M_{schwung}$) die Differenz ($\Delta N$) zwischen der Motor- und/oder Getriebeeingangsdrehzahl ($N_T$) vor und nach der Änderung der Getriebeübersetzung bestimmt wird.

6. System nach Anspruch 5, **dadurch gekennzeichnet, daß** zur Erfassung des zweiten Wertes ($M_{schwung}$) die bestimmte Differenz ($\Delta N$) mit der vorgegebenen Zeitdauer ($T_{schalt}$) und dem Trägheitsmoment der Schwungmasse und/oder mit dem Trägheitsmoment eines zwischen Fahrzeugmotor und Getriebe angeordneten Drehmomentenwandlers verknüpft wird.

7. System nach Anspruch 1, **dadurch gekennzeichnet, daß** der Vergleich des erfaßten ersten Wertes ($M_{mot}$) mit dem erfaßten zweiten Wert ($M_{schwung}$) mit einer vorgebbaren Hysterese ($M_{hysh}$, $M_{hysr}$) versehen ist.

8. System nach Anspruch 2 und 7 **dadurch gekennzeichnet, daß** die Hysterese ($M_{hysh}$, $M_{hysr}$) abhängig von der erfaßten Änderungsart vorgegeben wird.

9. System nach Anspruch 1, **dadurch gekennzeichnet, daß** als erster Wert ($M_{mot}$) ausgehend von einem das aktuelle Motorausgangsmoment repräsentierenden Wert ein prädiziertes Motorausgangsmoment ($M_{mot,pr}$) ermittelt wird.

10. System nach Anspruch 1, **dadurch gekennzeichnet, daß** zur Ermittlung des prädizierten Motorausgangsmoments ($M_{mot,pr}$)

- Werte erfaßt werden, die die Motorlast und/oder die Änderung der Motorlast repräsentieren, wobei insbesondere die Änderung der Motorlast innerhalb einer vorgebbaren Prädiktionszeit ($t_{prae}$) erfaßt wird, und/oder
- Werte ($\Delta T$ und $\Delta p$) erfaßt werden, die die Druck- und/oder die Temperaturänderung vor der Drosselklappe des Fahrzeugmotors repräsentieren, wobei insbesondere ein Lastsignal ($\alpha/N_{mot}$), das aus der erfaßten Motordrehzahl ($N_{mot}$) und der erfaßten Stellung ($\alpha$) der Motordrosselklappe ermittelt wird, mit den erfaßten Werten ($\Delta T$ und $\Delta p$) korrigiert wird.

**Claims**

1. System for changing the transmission ratio in a multi-step transmission, in which a centrifugal mass is accelerated or decelerated during a change in the transmission ratio and at least two different selectable strategies are provided for changing the transmission ratio, **characterized in that**

- a first value ($M_{mot}$) representing the engine output torque and a second value ($M_{schwung}$) representing the torque required to accelerate or decelerate the centrifugal mass during the changing of the transmission ratio are detected and

- one of the strategies is selected depending on a comparison between the detected first value ($M_{mot}$) and the detected second value ($M_{schwung}$).

**2.** System according to Claim 1, **characterized in that** as a type of change the system detects whether there is a change to a higher transmission ratio - upshift operation - or to a lower transmission ratio - downshift operation - and one of the strategies is selected depending on this detected type of change.

**3.** System according to Claim 1 or 2, **characterized in that** it detects whether overrun or tractive operation is present depending on the comparison between the detected first value ($M_{mot}$) and the detected second value ($M_{schwung}$), and the appropriate strategy is selected depending on whether overrun or tractive operation is detected.

**4.** System according to Claim 1, **characterized in that** a time period ($T_{schalt}$) for the changing of the transmission ratio is specified for the purpose of detecting the second value ($M_{schwung}$).

**5.** System according to Claim 4, **characterized in that** the difference ($\Delta N$) between the engine and/or transmission input speed ($N_T$) before and after the changing of the transmission ratio is determined for the purpose of detecting the second value ($M_{schwung}$).

**6.** System according to Claim 5, **characterized in that**, for the purpose of detecting the second value ($M_{schwung}$), the difference ($\Delta N$) determined is combined with the specified time period ($T_{schalt}$) and the moment of inertia of the centrifugal mass and/or with the moment of inertia of a torque converter arranged between the vehicle engine and the transmission.

**7.** System according to Claim 1, **characterized in that** the comparison between the detected first value ($M_{mot}$) and the detected second value ($M_{schwung}$) is provided with a specifiable hysteresis ($M_{hysh}$, $M_{hysr}$).

**8.** System according to Claims 2 and 7,
**characterized in that** the hysteresis ($M_{hysh}$, $M_{hysr}$) is specified as a function of the type of change detected.

**9.** System according to Claim 1, **characterized in that** a predicted engine output torque ($M_{mot,pr}$) is determined as the first value ($M_{mot}$), starting from a value that represents the current engine output torque.

**10.** System according to Claim 1, **characterized in that**, to determine the predicted engine output torque ($M_{mot,pr}$)

- values are detected that represent the engine load and/or the change in the engine load, in particular the change in the engine load being detected within a specifiable prediction time ($t_{prae}$), and/or
- values ($\Delta T$ and $\Delta p$) are detected that represent the change in pressure and/or temperature upstream of the throttle valve of the vehicle engine, in particular a load signal ($\alpha/N_{mot}$) determined from the detected engine speed ($N_{mot}$) and the detected position ($\alpha$) of the engine throttle valve being corrected by means of the detected values ($\Delta T$ and $\Delta p$).

**Revendications**

**1.** Système pour changer de rapport de vitesses dans une boîte de vitesses selon lequel, pendant un changement ou commutation de rapport de vitesses, on accélère ou on décélère une masse en mouvement, et pour changer le rapport de vitesses, on prévoit au moins deux stratégies différentes possibles,
**caractérisé en ce qu'**

- on détecte une première valeur ($M_{mot}$) représentant le couple moteur et une seconde valeur ($M_{lancée}$) représentant la demande de couple à l'accélération ou à la décélération de la masse en mouvement, lors d'une commutation de rapport de vitesses, et
- on sélectionne l'une des stratégies en fonction d'une comparaison entre la première valeur détectée ($M_{mot}$) et la seconde valeur détectée ($M_{lancée}$).

**2.** Système selon la revendication 1,
**caractérisé en ce que**
comme type de commutation, on détecte si l'on est en présence d'un changement vers un rapport plus long - montée d'un rapport - ou vers un apport plus court - descente de rapport -, et on sélectionne une stratégie en fonction du type de commutation détecté.

**3.** Système selon la revendication 1 ou 2,
   **caractérisé en ce qu'**en
   en fonction de la comparaison de la première valeur détectée ($M_{mot}$) et de la seconde valeur détectée ($M_{lancée}$), on évalue si l'on est en mode de poussée ou en mode de traction et suivant le mode de poussée ou de traction reconnu, on sélectionne la stratégie appropriée.

**4.** Système selon la revendication 1,
   **caractérisé en ce qu'**
   on prédétermine une durée ($T_{com}$) pour la saisie de la seconde valeur ($M_{lancée}$) pour la commutation de rapport de vitesses.

**5.** Système selon la revendication 4,
   **caractérisé en ce que**
   pour saisir la seconde valeur ($M_{lancée}$), on détermine la différence ($\Delta N$) entre le régime moteur et/ou la vitesse de rotation d'entrée de la boîte de vitesses ($N_T$) avant et après la commutation de rapport de vitesses.

**6.** Système selon la revendication 5,
   **caractérisé en ce que**
   pour saisir la seconde valeur ($M_{lancée}$), on combine la différence déterminée ($\Delta N$) avec la durée prédéfinie ($T_{com}$) et avec le moment d'inertie de la masse en mouvement et/ou avec le moment d'inertie d'un convertisseur de couple installé entre le moteur du véhicule et sa boîte de vitesses.

**7.** Système selon la revendication 1,
   **caractérisé en ce que**
   la comparaison de la première valeur saisie ($M_{mot}$) et de la seconde valeur saisie ($M_{lancée}$) se fait avec une hystérésis prédéterminée ($M_{hysh}$, $M_{hysr}$).

**8.** Système selon les revendications 2 et 7,
   **caractérisé en ce qu'**
   on prédétermine l'hystérésis ($M_{hysh}$, $M_{hysr}$) en fonction du type de commutation détecté.

**9.** Système selon la revendication 1,
   **caractérisé en ce que**
   comme première valeur ($M_{mot}$), on détermine à partir de la valeur représentant le couple moteur actuel, un couple moteur prévisionnel ($M_{mot}$, pr).

**10.** Système selon la revendication 1,
   **caractérisé en ce que**
   pour déterminer le couple moteur prévisionnel ($M_{mot, pr}$),

   - on saisit des valeurs représentant la charge du moteur et/ou la variation de charge du moteur, en saisissant notamment la variation de charge du moteur dans une durée prévisionnelle prédéterminée ($t_{pre}$) et/ou,
   - on saisit les valeurs ($\Delta T$, $\Delta p$) représentant la variation de pression et/ou de température en amont du volet d'étranglement du moteur du véhicule, en corrigeant avec les valeurs détectées ($\Delta T$, $\Delta p$), notamment un signal de charge ($\alpha/N_{mot}$) qui s'obtient à partir du régime moteur détecté ($N_{mot}$) et de la position détectée ($\alpha$) du volet d'étranglement du moteur.

EP 0 854 990 B1

101

102

103

104

105

106

107

M

W

G

MS

109

103a

105'

St

N_T

N_mot

M_mot

N_ab

FIG. 2

108

FIG. 1a

EP 0 854 990 B1

FIG. 1b

FIG. 1c

FIG. 1d

FIG.2

## Rückschaltung

$M_{mot}$

Zug

$M_{schwung}$

$M_{hysr}$

Schub

## Hochschaltung

$M_{mot}$

Zug

$M_{hysh}$

$M_{schwung}$

Schub

FIG. 3

EP 0 854 990 B1